(19) Europäisches Patentamt / European Patent Office / Office européen des brevets

(11) **EP 4 434 830 A1**

(12) **EUROPEAN PATENT APPLICATION**
published in accordance with Art. 153(4) EPC

(43) Date of publication:
**25.09.2024 Bulletin 2024/39**

(21) Application number: **22895379.0**

(22) Date of filing: **26.10.2022**

(51) International Patent Classification (IPC):
*B60T 13/74* (2006.01)       *B60T 17/22* (2006.01)
*F16D 65/18* (2006.01)       *F16D 66/02* (2006.01)
*F16D 121/24* (2012.01)

(52) Cooperative Patent Classification (CPC):
**B60T 13/74; B60T 17/22; F16D 65/18; F16D 66/02**

(86) International application number:
**PCT/JP2022/039887**

(87) International publication number:
**WO 2023/090095 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.11.2021 JP 2021188480**

(71) Applicant: **Hitachi Astemo, Ltd.
Ibaraki 312-8503 (JP)**

(72) Inventors:
• **SETO Shinji
Tokyo 100-8280 (JP)**
• **GOTO Daisuke
Hitachinaka-shi, Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(54) **ELECTRIC BRAKE DEVICE**

(57)    An object of the present invention is to provide an electric brake device that is able to calculate the conversion ratio of thrust to current regardless of a mechanical configuration, without prior measurement, and in response to changes over time.

The present invention includes an electric motor 8, a piston 6, brake pads 5a, 5b, and a motor control device 11. The piston 6 moves due to the rotation of the electric motor 8. The brake pads 5a, 5b press a disc rotor 2 through the use of a thrust generated by the movement of the piston 6. The motor control device 11 controls the rotation of the electric motor 8. The motor control device 11 includes an efficiency estimation section 35 that estimates the relationship between a current supplied to the electric motor 8 and the thrust in accordance with the relationship between an increase in the current value of the electric motor 8 with respect to an increase in the position of the piston 6 and the current value of the electric motor 8.

FIG. 2

**Description**

Technical Field

The present invention relates to an electric brake device used for braking a vehicle.

Background Art

In electric brake devices, it is necessary to estimate a pad thrust in order to control a braking force. To estimate the pad thrust, it is possible to use a thrust sensor, but this increases the cost. If the pad thrust can be estimated without using the thrust sensor, the cost can be reduced. Technologies described, for example, in Patent Literature 1 and Patent Literature 2 are proposed as a technology for estimating the pad thrust without using the thrust sensor.

Patent Literature 1 discloses a technology for estimating mechanical efficiency based on a motor current ratio during forward and reverse operations of a power transmission mechanism having a self-lock function section that does not have a reverse action.

Further, Patent Literature 2 discloses a technology for measuring the voltage and current values of an electric motor multiple times during a current reduction interval leading to a constant current interval in which the current is approximately constant, operating on a plurality of measured voltage and current values to estimate parameters for use in a cutoff current threshold calculation section, and allowing the cutoff current threshold calculation section to calculate a cutoff current threshold by using the estimated parameters.

Citation List

Patent Literature

Patent Literature 1: Japanese Unexamined Patent Application Publication No. 2018-57065
Patent Literature 2: Japanese Unexamined Patent Application Publication No. 2018-118524

Summary of Invention

Technical Problem

The technology described in Patent Literature 1 uses a sliding screw for a rotary/linear motion conversion mechanism, and is only applicable to a configuration having a self-locking function. It is possible to estimate the efficiency of a rotary/linear motion section employed by this type of technology. However, the efficiency, for example, of a reduction gear section cannot be estimated. Therefore, it may be difficult to estimate overall efficiency.

Further, the technology described in Patent Literature 2 requires prior measurement of the characteristics of each individual. Additionally, accuracy degradation may occur due to changes over time such as brake pad wear.

An object of the present invention is to provide an electric brake device that is able to calculate the conversion ratio of thrust to current regardless of a mechanical configuration, without prior measurement, and in response to changes over time.

Solution to Problem

In order to achieve the above object, according to an aspect of the present invention, there is provided an electric brake device including an electric motor, a linear motion section, a brake pad, and a motor control device. The linear motion section moves due to the rotation of the electric motor. The brake pad presses a disc rotor that rotates together with a wheel through the use of a thrust generated by the movement of the linear motion section. The motor control device controls the rotation of the electric motor. The motor control device includes an efficiency estimation section that estimates the relationship between a current supplied to the electric motor and the thrust in accordance with the relationship between an increase in the current value of the electric motor with respect to an increase in the position of the linear motion section and the current value of the electric motor.

Advantageous Effects of Invention

The present invention provides an electric brake device that is able to calculate the conversion ratio of thrust to current regardless of a mechanical configuration, without prior measurement, and in response to changes over time.

Brief Description of Drawings

FIG.1 is a schematic diagram illustrating an electric brake device according to a first embodiment of the present invention.
FIG. 2 is a control block diagram illustrating the electric brake device according to the first embodiment of the present invention.
FIG. 3 is a diagram illustrating the relationship between a motor current value I and the differential of the motor current value I with respect to a piston position x in accordance with the first embodiment of the present invention.
FIG. 4 is a diagram illustrating the relationship between a piston position and a brake pad thrust in accordance with the first embodiment of the present invention.
FIG. 5 is a diagram illustrating the relationship between the brake pad thrust and the position differential of the brake pad thrust in accordance with the first embodiment of the present invention.
FIG. 6 is a diagram illustrating the relationship between a current value without no-load current and the position differential of a current in accordance with the first embodiment of the present invention.
FIG. 7 is a control block diagram illustrating the electric brake device according to a second embodiment of the present invention.
FIG. 8 is a diagram illustrating the relationship between the piston position and a motor current value required for the brake pad thrust in accordance with the second embodiment of the present invention.
FIG. 9 is a diagram illustrating the relationship between the brake pad thrust and the position differential of the brake pad thrust in accordance with a third embodiment of the present invention.
FIG. 10 is a diagram illustrating the relationship between the brake pad thrust and the position differential of the brake pad thrust in accordance with a fourth embodiment of the present invention.
FIG. 11 is a diagram illustrating the relationship between a value obtained by subtracting a no-load current value I0 from the motor current value I and its position differential.
FIG. 12 is a control block diagram illustrating the electric brake device according to a sixth embodiment of the present invention.

Description of Embodiments

Embodiments of the present invention will now be described with reference to the accompanying drawings. It should be noted that component elements substantially identical or similar are designated by the same reference signs and may not be redundantly described.

First Embodiment

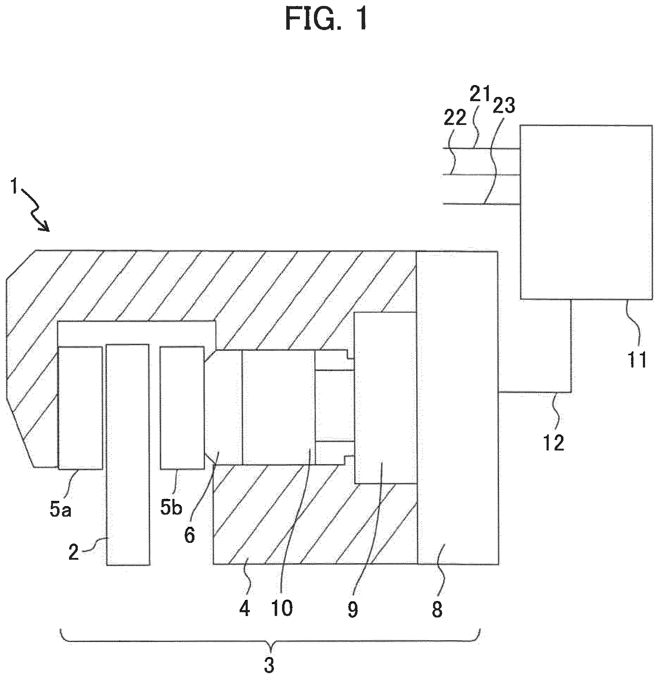

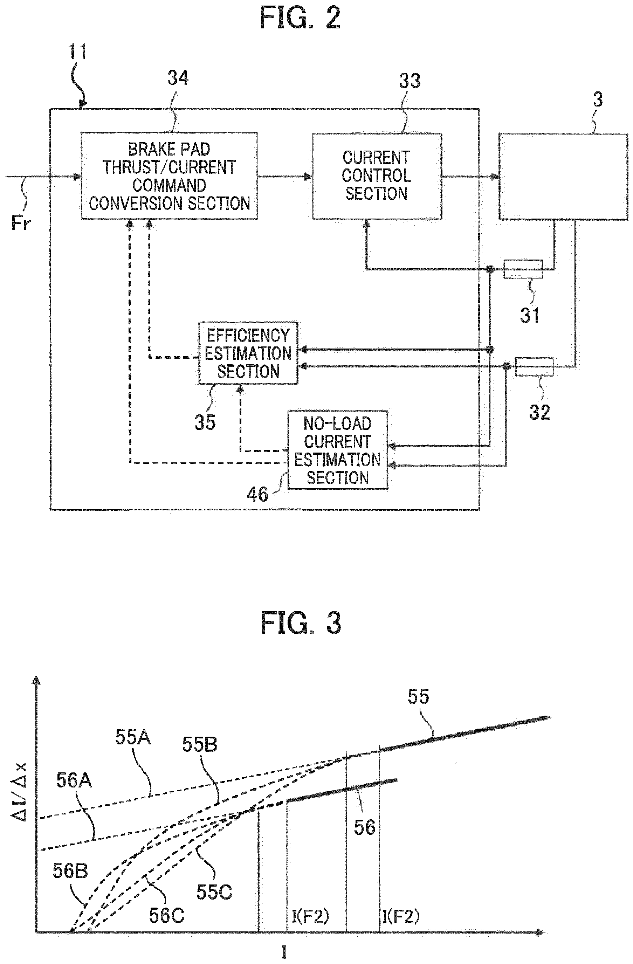

First, an electric brake device according to a first embodiment will be described. FIG. 1 is a schematic diagram illustrating the electric brake device according to the first embodiment of the present invention. FIG. 2 is a control block diagram illustrating the electric brake device according to the first embodiment of the present invention.
Generally, vehicles, such as automobiles, include four wheels, namely, left and right front wheels and left and right rear wheels, and each wheel is equipped with a brake device. As depicted in FIG. 1, the brake device 1 includes, for example, a housing 4, brake pads 5a, 5b, a piston 6, and an electric motor 8. These component elements are mounted on a carrier that is not depicted but is fixed to a non-rotating part of a vehicle, which is positioned more inner side of the vehicle than a disc rotor 2 (rotating member). The housing 4 is supported so as to be able to float in the axial direction of the disc rotor 2. The brake pads 5a, 5b (pressing members) are disposed on the left and right sides of the disc rotor 2. The piston 6 is able to linearly move inside the housing 4. The electric motor 8 drives the piston 6. The electric motor 8 applies thrust to the brake pads 5a, 5b through a rotary/linear motion conversion mechanism 10 and the piston 6. The brake pads 5a, 5b press the disc rotor 2, which rotates together with the wheels, from the left and right directions and thus produces a pinching force (pad thrust) to apply a braking force.
The output shaft of the electric motor 8 is connected to a reduction gear 9. The output shaft of the reduction gear 9 is connected to the rotary/linear motion conversion mechanism 10, which allows the piston 6 to move in a linear motion direction.
In the first embodiment, the disc rotor 2, the housing 4, the brake pads 5a, 5b, the piston 6, the electric motor 8, the reduction gear 9, and the rotary/linear motion conversion mechanism 10 form a brake caliper 3. Further, the rotary/linear motion conversion mechanism 10 and the piston 6 form a linear motion section.

The electric motor 8 is connected to a motor control device 11 (controller) through an electric wire 12. Rotation control of the electric motor 8 is provided by the motor control device 11. FIG. 1 indicates that the electric motor 8 is separate from the motor control device 11. Alternatively, however, the electric motor 8 may be integral with the motor control device 11. Further, as depicted in FIG. 2, the electric motor 8 includes a current detection section 31 and a motor position detection section 32. The current detection section 31 detects current when the electric motor 8 is driven.

The motor control device 11 receives a braking force command Fr, for example, from a higher-level control device (vehicle control ECU), and issues a current command to the electric motor 8 in accordance, for example, with a control program that is set in advance based on the value detected by the current detection section 31 and on the value detected by the motor position detection section 32.

A control signal line 21 and communication lines 22, 23 are connected to the motor control device 11. The control signal line 21 is for inputting a control command from the higher-level control device, such as a vehicle control ECU (Electronic Control Unit), to the motor control device 11. The communication lines 22, 23 are for communicating information other than the control command with the higher-level control device. It should be noted that the motor control device 11 is assumed to be disposed separately from the higher-level control device. Alternatively, however, they may be integrated into a control device.

A calculation method adopted by the motor control device 11 is depicted in FIG. 2. When a braking thrust command Fr (braking force) is issued by the higher-level control device through the control signal line 21, the braking thrust command Fr is converted into a current command value by a brake pad thrust/current command conversion section 34, and then the current command value is outputted to a current control section 33. The motor current value of the electric motor 8, which is detected by the current detection section 31, is fed back to the current control section 33. The current control section 33 then calculates a motor operation command value indicating a supply current value, and supplies a current to the electric motor 8 in accordance with the electric motor operation command value. In this instance, the brake pad thrust/current command conversion section 34 uses a value that is updated each time a brake pad thrust/current coefficient (current/thrust conversion ratio) is estimated by an efficiency estimation section 35.

A method of calculating the current/thrust conversion ratio in the efficiency estimation section 35 is described below. The current/thrust conversion ratio is calculated by performing a current/thrust conversion ratio calculation operation. When a brake pad thrust F is sufficiently great (in a state where the brake pad thrust F is estimated to be greater than a later-described brake pad thrust F1), the current/thrust conversion ratio calculation operation is performed to issue a command to the motor control device 11 in order to further increase the brake pad thrust. This operation is performed to further increase the brake pad thrust (at the time of application) in a state where, for example, the vehicle is parked while a sufficient brake pad thrust (referred to as the brake pad thrust F2) is given. As a result, the electric motor 8 operates in a force increasing direction (application direction) so as to increase the brake pad thrust and current value.

The current detection section 31 detects a motor current value (e.g., a q-axis component current corresponding to torque) indicating a current that actually flows to the electric motor 8. The motor current value to be used should preferably be filtered to remove noise components.

The motor current value I detected by the current detection section 31 and a motor position detection value detected by the motor position detection section 32 are inputted to the efficiency estimation section 35 and stored in a buffer. Based on data stored in the buffer, the motor current value I and the differential of the motor current value I with respect to a piston position x are depicted in FIG. 3.

FIG. 3 is a diagram illustrating the relationship between the motor current value I and the differential of the motor current value I with respect to the piston position x in accordance with the first embodiment of the present invention.

In FIG. 3, the horizontal axis represents the motor current value I, and the vertical axis represents a value $\Delta I/\Delta x$ that is obtained by differentiating the motor current value I with respect to the piston position. It should be noted that the piston position x can be calculated from the motor position obtained by the motor position detection section 32 through the use of a reduction ratio and a rotary/linear motion ratio. Further, the piston position x may be directly detected by using a sensor.

In the above instance, detection is made as indicated by a solid line 55 when the current/thrust conversion ratio is low, and detection is made as indicated by a solid line 56 when the current/thrust conversion ratio is high. Accordingly, approximate straight lines indicated by dashed lines 55A, 56A are calculated.

The approximate straight lines can be expressed by the equation below.

$$dI/dx = A \times I + C \quad \dots \quad (1)$$

A slope A and an intercept C are determined by Equation (1). It should be noted that, although no operation is performed in a low thrust range, when the current/thrust conversion ratio is low, a curve indicated by a dashed line 55B is obtained if the brake pad is new, and a curve indicated by a dashed line 55C is obtained if the brake pad is worn. Meanwhile, when the power/thrust conversion ratio is high, a curve 56B is obtained if the brake pad is new, and a curve indicated by a dashed line 56C is obtained if the brake pad is worn.

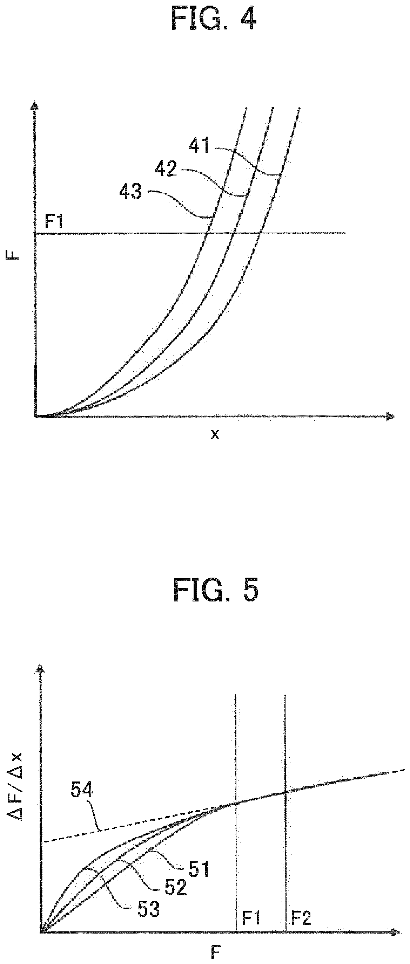

The relationship (rigidity) between the piston position x and the brake pad thrust F varies with brake pad wear. In general, however, there is a relationship depicted, for example, in FIG. 4.

FIG. 4 is a diagram illustrating the relationship between the piston position and the brake pad thrust in accordance with the first embodiment of the present invention. In FIG. 4, the vertical axis represents the brake pad thrust F, and the horizontal axis represents the piston position x.

In a low thrust region (F1 or lower), when the brake pad is new 41, the rate of increase in the brake pad thrust F with respect to the motor rotation position is initially low (low rigidity), and subsequently becomes higher (higher rigidity) as the wear increases, namely, from intermediate wear 42 to severe wear 43.

However, when the brake pad thrust F is in a high thrust region (F1 or higher), a range appears in which a rising tendency is almost constant. It should be noted that the point where the piston position x represented by the horizontal axis is 0 indicates the point where the brake pad thrust F increases.

FIG. 5 is obtained based on the above relationship. In FIG. 5, the horizontal axis represents the brake pad thrust F, and the vertical axis represents the differential of the brake pad thrust F with respect to the piston position x (thrust gradient). In FIG. 5, a state where the brake pad is new is designated by the numeral 51, a state where the brake pad is moderately worn is designated by the numeral 52, and a state where the brake pad is severely worn is designated by the numeral 53. Then, in a region where the brake pad thrust F is equal to or greater than F1, the relationship is expressed by an approximation line 54 of approximate equation (2) regardless of the degree of wear.

$$dF/dx = a \times F + b \quad \ldots \quad (2)$$

where F is the brake pad thrust, x is a piston stroke, a is a coefficient of proportionality, and b is the intercept. The above relationship can be determined in advance, for example, by measurement or calculation. Although not depicted in FIG. 5, when, for example, the disc rotor 2 is tilted, resulting characteristics similarly vary with the tilt of the disc rotor 2 in the low thrust region. However, in the high thrust region, the characteristics follow the approximate equation for an equivalent thrust gradient.

Further, the relationship between the brake pad thrust F and the motor current value I is approximately expressed by Equation (3) when operations are performed at a constant speed.

$$F + F0 = \eta \times g \times K \times Kt \times I \quad \ldots \quad (3)$$

where $\eta$ is efficiency, g is the reduction ratio, K is a rotary/linear motion conversion ratio (e.g., if a lead is L, then $2 \times \pi/L$), and Kt is a torque constant. Equation (3) above can be substituted by Equation (4).

$$F + F0 = \alpha \times I \quad \ldots \quad (4)$$

where $\alpha$ is the current/thrust conversion ratio that includes elements such as the reduction ratio, the rotary/linear motion conversion ratio, the efficiency, and the torque constant.

Differentiating Equation (4) yields Equation (5).

$$dF/dx = \alpha \times dI/dx \quad \ldots \quad (5)$$

Substituting Equations (5) and (4) into Equation (2) yields Equation (6).

$$\alpha \times dI/dx = a \times (\alpha \times I - F0) + b \quad \ldots \quad (6)$$

Further, Equation (7) is obtained by converting Equation (6).

$$dI/dx = a \times I + b/\alpha - a \times F0/\alpha \quad \ldots \quad (7)$$

Ignoring friction F0 above yields Equation (8).

$$dI/dx = a \times I + b/\alpha \quad \dots \quad (8)$$

Comparing the intercepts of Equations (1) and (8) obtained by the current/thrust conversion ratio calculation operation yields Equation (9), and the current/thrust conversion ratio $\alpha$ is determined.

$$\alpha = b/C \quad \dots \quad (9)$$

Moreover, although the friction F0 has been ignored for the purpose of consideration, when a frictional force component is set to a certain value on the assumption that the frictional force component does not significantly change, the current/thrust conversion ratio $\alpha$ can be more accurately determined by Equation (10), which is obtained from Equations (1) and (7).

$$\alpha = (b - a \times F0)/C \quad \dots \quad (10)$$

It should be noted that a no-load current estimation section 46 may be provided to take the friction F0 into consideration. The no-load current estimation section 46 performs an operation in a force-increasing direction or force-decreasing direction in a state where the brake pads 5a, 5b are out of contact with the disc rotor 2 to leave a gap, and a current flowing in such an instance is a no-load current value I0. The no-load current value I0 has a relationship expressed by Equation (11) below.

$$F0 = \alpha \times I0 \quad \dots \quad (11)$$

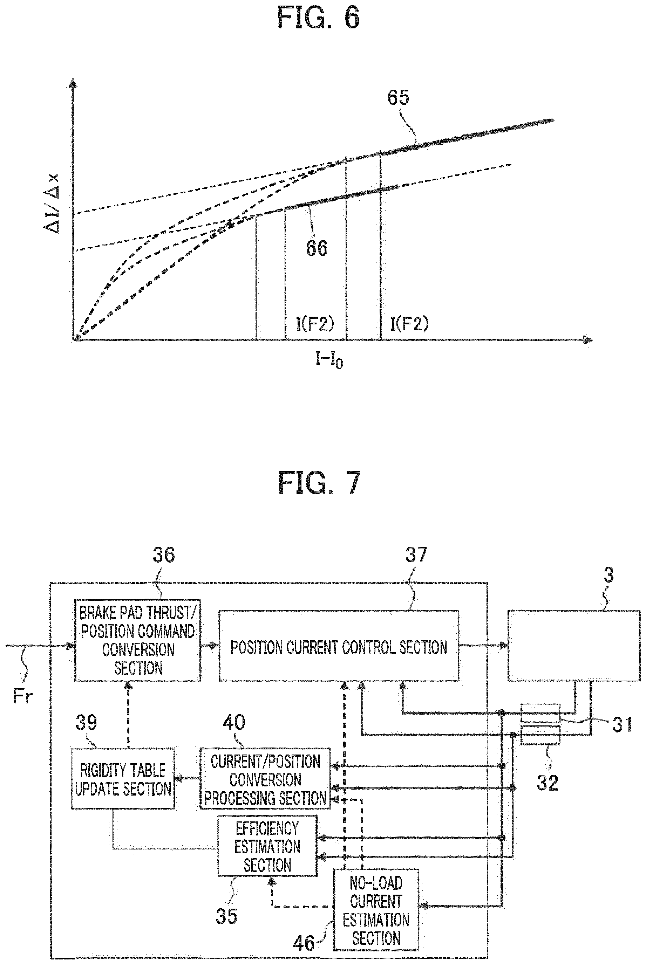

where the friction F0 includes all frictions occurring between the electric motor 8 and the piston 6, and is converted to a value in the linear motion section. The friction F0 also includes a viscosity term that is a function of velocity. Therefore, it is more preferable that the function be determined in advance or determined in advance as the no-load current value I0 (v) by performing an operation at a plurality of constant rotation speeds v.
In the current/thrust conversion ratio calculation operation, utilizing the no-load current value I0 makes it possible to derive the relationship depicted in FIG. 6, which is regarding the value obtained by subtracting the no-load current value I0 from the motor current value I and its position differential. If the no-load current value I0 is set to a value that takes into account an operating speed during current/thrust conversion ratio calculation, improved accuracy is achieved. When the current/thrust conversion ratio is low, the resulting detection is as indicated by a solid line 65. When the current/thrust conversion ratio is high, the resulting detection is as indicated by a solid line 66. Accordingly, the following approximate equation (12) is obtained.

$$dI/dx = A \times (I - I0) + C \quad \dots \quad (12)$$

Meanwhile, Equation (4) can be substituted by

$$F = \alpha \times (I - I0) \quad \dots \quad (13).$$

When Equation (13) and the position differential of Equation (13) are substituted into Equation (2), Equation (14) is obtained.

$$dI/dx = a \times (I - I0) + b/\alpha \quad \dots \quad (14)$$

Accordingly, when Equations (12) and (14) are compared to each other, the current/thrust conversion ratio $\alpha$ can be determined as indicated in Equation (15).

$$\alpha = b/C \quad \dots \quad (15)$$

Further, a similar operation may be performed in the direction of decreasing the thrust. This operation is performed when, for example, the vehicle is parked while a sufficient brake pad thrust (referred to as the brake pad thrust F2) is given and a braking thrust is to be decreased (at the time of release). As a result, the electric motor 8 operates in the reducing direction (release direction), and thus decreases the brake pad thrust and current value. Consequently, a similar relationship is obtained. In general, however, forward efficiency and reverse efficiency do not match. Therefore, a current/thrust conversion ratio $\alpha r$ at the time of release is determined.

A thrust control method will now be described. When the braking force is to be generated, since the current/thrust conversion ratio $\alpha$ for a brake thrust command Fr is determined, the thrust can be controlled by allowing the brake pad thrust/current command conversion section 34 to perform conversion to a current command Ir as indicated in Equation (16) and issue the current command to the electric motor 8.

$$Ir = Fr/\alpha + I0 \quad \dots \quad (16)$$

Further, the no-load current value I0 estimated by the no-load current estimation section 46 can be used. In a case where such a no-load current value I0 is used, the current control section 33 can provide further improved accuracy by feeding back the detected motor current value I.

As described above, the first embodiment includes the efficiency estimation section that estimates the relationship between the current supplied to the electric motor and the thrust in accordance with the relationship between an increase in the current value of the electric motor with respect to an increase in the position of the linear motion section and the current value of the electric motor.

The first embodiment makes it possible to estimate the brake pad thrust without using a thrust sensor, and perform thrust control of the brake pad with high accuracy at low cost.

Second Embodiment

A second embodiment will now be described. FIG. 7 is a control block diagram illustrating the electric brake device according to the second embodiment of the present invention.

The second embodiment includes a brake pad thrust/position command conversion section 36 and a position current control section 37. The brake pad thrust/position command conversion section 36 outputs a position command to the position current control section 37 in accordance with a signal of a rigidity table update section 39.

The position current control section 37 feeds back position information, which is obtained from the motor position detection section 32 in accordance with the position command, and the current value of the electric motor 8, which is obtained by the current detection section 31. As a result, the current command is issued to the electric motor 8.

In the above instance, the rigidity table update section 39 updates a rigidity table in accordance with a current/position conversion processing section 40 and the efficiency estimation section 35.

The current/position conversion processing section 40 filters and removes noise components out of the motor current value I detected by the current detection section 31 during a brake operation, calculates the current required for the brake pad thrust, which removes the current for acceleration and friction, through the use of the motor rotation position, motor speed, and motor acceleration obtained by the motor position detection section 32, and tabulates the relationship between the calculated current and the motor position as the rigidity table. It should be noted that the current for friction is estimated by the no-load current estimation section 46.

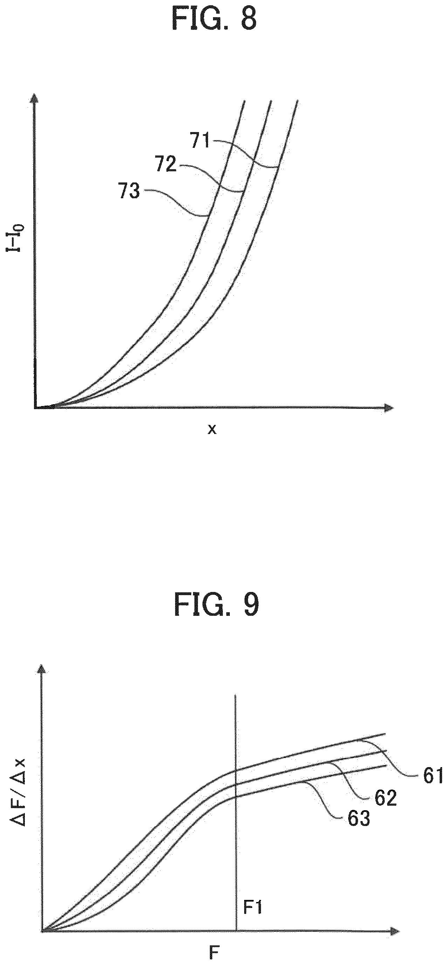

From the above-described result, the relationship depicted, for example, in FIG. 8 is determined. FIG. 8 is a diagram illustrating the relationship between the piston position and the motor current value required for the brake pad thrust in accordance with the second embodiment of the present invention. The vertical axis represents the motor current value I required for the brake pad thrust, and the horizontal axis represents the piston position x. Depending on the degree of wear, the relationship determined by calculation is 71 for a new state, 72 for a moderately worn state, or 73 for a severely worn state.

Further, the efficiency estimation section 35 estimates the current/thrust conversion ratio in the same manner as in the first embodiment.

Since a current-position relationship is determined as a table by the current/position conversion processing section 40, the rigidity table update section 39 is able to calculate the relationship indicated in the rigidity table (thrust-position) by multiplying the current by the current/thrust conversion ratio determined by the efficiency estimation section, and update data in the rigidity table as needed.

Upon receiving the input of the brake thrust command Fr (braking force), the brake pad thrust/position command conversion section 36 references the rigidity table stored in the rigidity table update section 39, and makes conversion to a motor position command. The position current control section 37 feeds back the motor current value I and the motor position (speed, acceleration) in accordance with the motor position command in order to output an operation command to the electric motor 8.

The second embodiment makes it possible to provide control based on a detected position value with less noise by using the rigidity table without directly feeding back the current during thrust control, and achieve thrust control with higher accuracy.

Third Embodiment

A third embodiment will now be described with reference to FIG. 9. The third embodiment differs from the first embodiment in the method of efficiency calculation in the efficiency estimation section 35.

In the first embodiment, the relationship (rigidity) between the piston stroke and the brake pad thrust is linear regardless of wear. However, the third embodiment relates to a case where the relationship is not linear.

The rigidity of the brake caliper 3 is determined by the rigidities, for example, of the housing 4, rotary/linear motion conversion mechanism 10, and brake pads 5a, 5b. However, depending on the relationship between the rigidities, even the high thrust region is affected by the brake pads 5a, 5b. In some cases where the degrees of wear of the brake pads 5a, 5b are different, it may not be possible to assume that the approximate equation of rigidity does not vary in the high thrust region.

For example, in some cases, the relationship between the brake pad thrust F and the position differential ΔF/Δx of the brake pad thrust F may be as depicted in FIG. 9. More specifically, unlike the first embodiment, the resulting relationship may indicate that the rigidity of a new brake pad is low (curve 63), and that, as the degree of wear increases, the brake pad is moderately worn (curve 62) and then severely worn (curve 61). In the above instance, it is assumed that a linear relationship, which is in the above-mentioned high thrust region, is obtained, and that these relationships are stored in advance for each wear amount of the brake pad.

More specifically, it is assumed that the brake pad thrust F is greater than or equal to F1, and that the relationship expressed by Equation (17) exists.

$$dF/dx = a(w) \times F + b(w) \quad \dots \quad (17)$$

where w is the wear amount. For example, the greater the wear amount indicated by both a(w) and b(w), the higher the rigidity and the greater the values.

Except that a and b are functions of the wear amount, the relationship expressed by Equation (18) below is obtained, as is the case with the first embodiment.

$$dI/dx = a(w) \times I + b(w)/\alpha \quad \dots \quad (18)$$

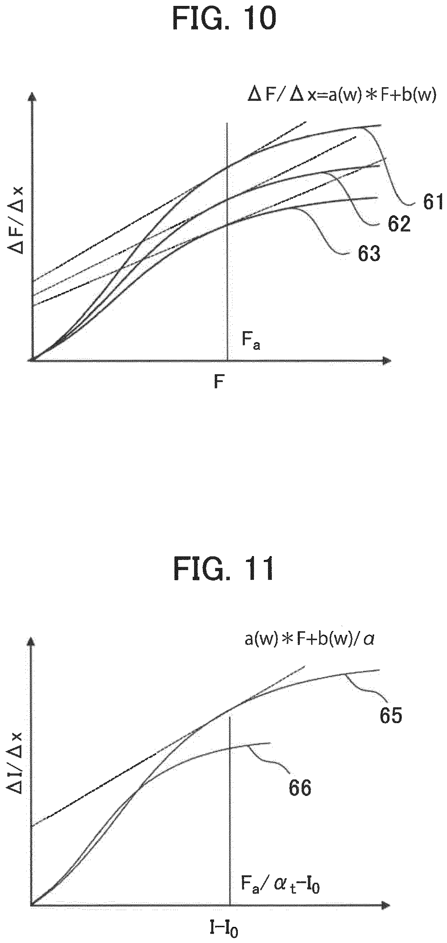

Further, when the no-load current value I0 is used, as is the case with the first embodiment, the current/thrust conversion ratio calculation operation makes it possible to derive the relationship regarding the value obtained by subtracting the no-load current value I0 from the motor current value I and its position differential as depicted in FIG. 11. If the no-load current value I0 is set to a value that takes into account an operating speed during current/thrust conversion ratio calculation, improved accuracy is achieved. When the current/thrust conversion ratio is low, the resulting detection is as indicated by a solid line 65. When the current/thrust conversion ratio is high, the resulting detection is as indicated by a solid line 66. Accordingly, the following approximate equation (19) is obtained.

$$dI/dx = A \times (I - I0) + C \quad \dots \quad (19)$$

When Equation (18) and Equation (19) are compared, Equation (20) is obtained so that the brake pad wear amount w can be determined.

$$a(w) = A \quad \dots \quad (20)$$

Further, Equation (21) below can be converted.

$$b(w)/\alpha=C \quad \ldots \quad (21)$$

Accordingly, the current/thrust conversion ratio $\alpha$ can be derived as indicated in the equation $\alpha=b(w)/c$.

Although Equation (17) indicates a linear relationship, a different function may be used for approximation. In some cases, approximation can be performed as indicated, for example, in Equation (22).

$$dF/dx=a(w)\times F^n+b(w) \quad \ldots \quad (22)$$

When Equation (13) and its position differential is substituted into the above equation, Equation (23) is obtained.

$$dI/dx=a(w)\times\alpha^{(n-1)}\times(I-I0)^n+b(w)/\alpha \quad \ldots \quad (23)$$

Meanwhile, the relationship expressed by equation (24) is obtained by the current/thrust conversion ratio calculation operation.

$$dI/dx=A\times(I-I0)^n+C \quad \ldots \quad (24)$$

When the coefficients are compared, Equation (25) and Equation (26) are obtained.

$$A=a(w)\times\alpha^{(n-1)} \quad \ldots \quad (25)$$

$$C=b(w)/\alpha \quad \ldots \quad (26)$$

Since Equations (25), Equation (26), a(w), and b(w) are functions of the wear amount w, the current/thrust conversion ratio $\alpha$ and the wear amount w are determined.

Although an example is cited here by using an exponential function, the shape of the function is not limited. Further, in some cases, the relationship between dF/dx and F may be indicated in a tabular form.

The present embodiment relates to the method of efficiency calculation in the efficiency estimation section 35. Further, the method of control exercised by the efficiency estimation section 35 is similar to that used in the first and second embodiments.

Even in an electric brake in which a rigidity change amount in the high thrust region varies with the wear amount of a brake pad, the present embodiment makes it possible to derive the current/thrust conversion ratio without a thrust sensor and provide highly accurate thrust control in consideration of the wear amount of the brake pad.

Furthermore, since the present embodiment is able to estimate the degree of wear of the brake pad, the present embodiment additionally makes it possible to indicate when to replace the brake pad.

Fourth Embodiment

A fourth embodiment will now be described with reference to FIG. 10. The method of efficiency estimation in the efficiency estimation section 35 in the fourth embodiment is different from that used in the first embodiment.

The example cited in the description of the fourth embodiment relates to a case where the relationship between dF/dx and F has more general characteristics in which the slope varies with F as depicted in FIG. 10.

In this case too, it is assumed that the relationship between dF/dx and F is obtained in advance. Then, the relationship $\Delta F/\Delta x=a(w)\times F+b(w)$ at a specific brake pad thrust Fa is obtained (dashed lines in FIG. 10).

In the above case, at a specific brake pad thrust Fa, the relationship expressed by Equation (27) below is obtained, as is the case with the first embodiment.

$$dI/dx=a(w)\times I+b(w)/\alpha \quad \ldots \quad (27)$$

Further, the relationship expressed by Equation (28) is obtained (dashed line in FIG. 11) at a certain motor current value I by performing the same current/thrust conversion ratio calculation operation as in the first embodiment.

$$dI/dx=A\times(I-I0)+C \ \dots \ (28)$$

In the above case, it would be good if the current value I of the brake pad thrust Fa was known. However, since it is unknown at this point, A and C in a case where I=Fa/αT are determined from a tentative conversion ratio αT (e.g., by using a nominal value or the previously determined α).

Accordingly, when Equation (27) and Equation (28) are compared, the wear amount w of the brake pad can be determined from Equation (29).

$$a(w)=A \ \dots \ (29)$$

Further, when Equation (30), namely,

$$b(w)/\alpha=C \ \dots \ (30)$$

is converted to obtain the equation α=b(w)/C, the current/thrust conversion ratio α can be derived.

In this instance, the resulting value may be set as the current/thrust conversion ratio α. However, this estimated value is set as αb, and the motor current value I at Fa is determined again by equation (31).

$$I=Fa/\alpha b \ \dots \ (31)$$

Equation (28) using the motor current value I obtained here is determined again.

$$dI/dx=A\times(I-I0)+C \ \dots \ (32)$$

Consequently, the following equations are obtained by comparing the coefficients again, as is the case with Equations (29) and (30).

$$a(w)=A \ \dots \ (33)$$

$$b(w)/\alpha=C \ \dots \ (34)$$

Then, the current/thrust conversion ratio α can be derived by converting Equation (34) as indicated in the equation α=b(w)/C.

When the above is repeated once or several times, the current/thrust conversion ratio α can be calculated by causing α to converge.

In the fourth embodiment, the efficiency estimation section estimates the relationship between current and thrust supplied to the electric motor 8 in accordance with the relationship between the current value I of the electric motor and an increase in the current value I of the electric motor with respect to an increase in the position of the linear motion section at an expected current value for generating a specific thrust (a current value calculated from a specific thrust by using a value obtained by estimating or assuming in advance the relationship between current and thrust).

When calculations are performed as described above, it is possible to perform conversion at the current/thrust conversion ratio α even with respect to rigidity having characteristics in which ΔF/Δx varies with the thrust.

Fifth Embodiment

A fifth embodiment will now be described. The fifth embodiment is described with reference to an example in which the temperature of the brake device 1 is used for efficiency estimation in the efficiency estimation section 35. The rigidity of the brake pads 5a, 5b changes when the temperature changes.

Consequently, if there is a linear relationship when the brake pad thrust is greater than or equal to F1 as is the case with the first embodiment, the relationship between the brake pad thrust F and the position differential obtained by differentiating the brake pad thrust with respect to the piston position is expressed by Equation (35) in which a slope a and an intercept b are expressed as a function of temperature.

$$dF/dx=a(T)\times F+b(T) \quad\ldots\quad (35)$$

Meanwhile, the brake pad temperature in the current/thrust conversion ratio calculation operation is assumed to be Tp1. It is assumed that Tp1 is estimated or measured in advance. In the current/thrust conversion ratio calculation operation, the relationship of Equation (36) can be obtained, as is the case with Equation (12) in the first embodiment.

$$dI/dx=A\times(I-I0)+C \quad\ldots\quad (36)$$

Meanwhile, the current/thrust conversion ratio $\alpha$ includes the efficiency $\eta$, the reduction ratio g, the rotary/linear motion conversion K, and the torque constant Kt. However, the torque constant of the electric motor 8 is particularly likely to be affected by temperature. Therefore, when the motor temperature during the current/thrust conversion ratio calculation operation is Tm1, $\alpha$ is expressed as a function of the motor temperature Tm1.

From the above-described relationships, the current/thrust conversion ratio $\alpha$ can be determined as indicated in Equation (37).

$$\alpha(Tm1)=b(Tp1)/C \quad\ldots\quad (37)$$

If it is known in advance that the torque constant at this temperature T is $\beta(T)$ times the torque constant Kt0 at the reference temperature (T0), the relationship of Equation (38) can be obtained.

$$Kt(T)=Kt0\times\beta(T) \quad\ldots\quad (38)$$

Consequently, the current/thrust conversion ratio $\alpha(T0)$ at the reference temperature T0 is obtained as indicated in Equation (39).

$$\alpha(T0)=\alpha/\beta(Tm1) \quad\ldots\quad (39)$$

The present embodiment relates to the method of efficiency calculation in the efficiency estimation section 35. Further, the method of control exercised by the efficiency estimation section 35 is similar to that used in the first and second embodiments.

For example, when a certain braking force is to be generated, as is the case with the first embodiment, the brake pad thrust/current command conversion section 34 can perform conversion to the current command Ir as indicated in Equation (40), issue the resulting command to the electric motor, and thus obtain the thrust specified by the command in a situation where the thrust/current conversion ratio $\alpha(T0)$ at the reference temperature T0 for the brake thrust command Fr is determined and the braking force is to be actually generated at a temperature of Tm2.

$$Ir=Fr/\beta(Tm2)+I0 \quad\ldots\quad (40)$$

Further, since the current-position relationship is determined in a tabular form by the current/position conversion processing section 40, the rigidity table update section 39, as is the case with the second embodiment, is able to calculate the relationship in the rigidity table (thrust-position) by multiplying the current by the current/thrust conversion ratio determined by the efficiency estimation section 35, and thus update the rigidity table as needed.

Furthermore, the present embodiment is described on the assumption that the relationship expressed by the equation dF/dx=a(T)×F+B(T) is a function of temperature only. Alternatively, however, a function of the brake pad wear amount may be further added as described in conjunction with the third embodiment.

More specifically, Equation (41) is used.

$$dF/dx=a(T,w)\times F+b(T,w) \quad\ldots\quad (41)$$

Accordingly, as is the case with the third embodiment, it is possible to determine the current/thrust conversion ratio and the wear amount, and thus determine the wear amount in consideration of temperature.

The efficiency estimation section 35 in the present embodiment estimates the relationship between current and thrust from temperature difference in accordance with the temperature at the time of estimation of current-thrust relationship.

By additionally performing temperature conversion, the present embodiment can determine the current/thrust conversion ratio regardless of the temperature at the time of current/thrust conversion ratio calculation operation and regardless of the brake pad wear amount.

Sixth Embodiment

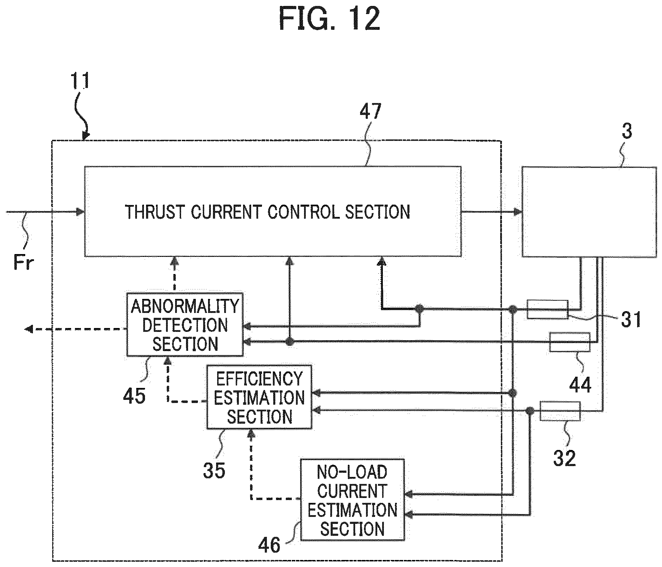

A sixth embodiment will now be described with reference to FIG. 12. FIG. 12 is a control block diagram illustrating the electric brake device according to the sixth embodiment of the present invention.

The sixth embodiment is configured such that a thrust detection section 44 for detecting the thrust of the brake pad is additionally included in the electric brake device described in conjunction with the first embodiment.

As depicted in FIG. 12, the electric brake device includes a thrust current control section 47 for providing feedback control of motor current value and detected brake pad thrust value in response to the brake thrust command Fr from a higher level. Further, the electric brake device includes the thrust detection section 44 in addition to the current detection section 31 and the motor position detection section 32. Furthermore, the electric brake device includes an abnormality detection section 45 for detecting abnormalities in the thrust detection section 44.

When the current/thrust conversion ratio $\alpha$ is determined by the efficiency estimation section described in conjunction with the first to fourth embodiments, the abnormality detection section 45 is able to estimate the brake pad thrust F as expressed in Equation (42).

$$F = \alpha \times (I - I0) \quad \dots \quad (42)$$

Here, a brake pad thrust Fs obtained from the thrust detection section 44 is also determined. The above values are compared to detect abnormalities in the thrust detection section 44. If an abnormality is detected, a signal is given to the higher-level control device to notify it of the abnormality for the purpose of changing a control method. The control method is changed, for example, to a control method that is described in conjunction with the first to fourth embodiments and is not required for the thrust detection section 44.

The sixth embodiment includes the abnormality detection section 45 that detects abnormalities in the thrust detection section 44 from the output value of the thrust detection section 44 and the output value of the efficiency estimation section 35.

The sixth embodiment makes it possible to detect abnormalities in the thrust detection section 44 and thus improve system reliability.

The foregoing embodiments have been described with reference to an example in which the electric brake device uses a disc brake. Alternatively, however, the electric brake device may use a different type of brake, such as a drum brake, and allow, for example, an electric motor to operate a piston to press a brake lining against a brake drum, which is a rotating body, and thus generate the braking force.

Further, the foregoing embodiments may be applied to the estimation of thrust of an electric parking brake. When a parking brake command is given from a higher level while a control block configuration depicted in FIG. 1 is adopted, a motor current may be supplied to generate a thrust required for the electric parking brake, detect a point of time based on the current value, and stop the motor current at the detected point of time.

Reference Signs List

1... brake device, 2... disc rotor, 3... brake caliper, 4... housing, 5a, 5b... brake pad, 6... piston, 8... electric motor, 9... reduction gear, 10... rotary/linear motion conversion mechanism, 11... motor control device, 31... current detection section, 32... motor position detection section, 33... current control section, 34... brake pad thrust/current command conversion section, 35... efficiency estimation section, 36... brake pad thrust/position command conversion section, 37... position current control section, 39... rigidity table update section, 40... current/position conversion processing section, 44... thrust detection section, 45... abnormality detection section, 46... no-load current estimation section, 47... thrust current control section

**Claims**

1.  An electric brake device comprising: an electric motor; a linear motion section that moves due to the rotation of the electric motor; a brake pad that presses a disc rotor that rotates together with a wheel through the use of a thrust generated by the movement of the linear motion section; and a motor control device that controls the rotation of the electric motor,
    wherein the motor control device includes an efficiency estimation section that estimates the relationship between a current supplied to the electric motor and the thrust in accordance with the relationship between an increase in the current value of the electric motor with respect to an increase in the position of the linear motion section and the current value of the electric motor.

2.  The electric brake device according to claim 1,
    wherein, in a state where a vehicle is parked, the efficiency estimation section causes the electric motor to operate in the application direction, and thus estimates the relationship between the thrust and the current at the time of application.

3.  The electric brake device according to claim 1,
    wherein, in a state where the vehicle is parked, the efficiency estimation section issues a command for causing the electric motor to operate in a release direction, and thus estimates the relationship between the thrust and the current at the time of release.

4.  The electric brake device according to claim 1,
    wherein the motor control device includes a current control section that supplies a current to the electric motor in accordance with the current-thrust relationship obtained by the efficiency estimation section and with a brake thrust command from a higher-level control device.

5.  The electric brake device according to claim 4,
    wherein the motor control device includes a brake pad thrust/current command conversion section that outputs a current command value to the current control section in accordance with the current-thrust relationship obtained by the efficiency estimation section and with the brake thrust command from the higher-level control device.

6.  The electric brake device according to claim 1,
    wherein the motor control device includes a current/position conversion processing section and a rigidity table update section, the current/position conversion processing section tabulating the relationship between the current of the electric motor during a brake operation and the position of the linear motion section as a rigidity table, the rigidity table update section updating data in the rigidity table in accordance with the current/position conversion processing section and the efficiency estimation section.

7.  The electric brake device according to claim 1,
    wherein the efficiency estimation section estimates the wear amount of the brake pad from a motor current value and a no-load current value.

8.  The electric brake device according to any one of claims 1 to 7,
    wherein the efficiency estimation section estimates the relationship between current and thrust from temperature difference in accordance with the temperature at the time of estimation of the current-thrust relationship.

9.  The electric brake device according to claim 1,
    wherein the motor control device includes a thrust detection section and an abnormality detection section, the thrust detection section detecting the thrust of the brake pad, the abnormality detection section detecting abnormalities in the thrust detection section from the output value of the thrust detection section and the output value of the efficiency estimation section.

10. An electric brake device comprising:

    an electric motor; a linear motion section that moves due to the rotation of the electric motor; a brake pad that presses a disc rotor that rotates together with a wheel through the use of a thrust generated by the movement of the linear motion section; and a motor control device that controls the rotation of the electric motor,
    wherein the motor control device includes an efficiency estimation section that estimates the relationship between a current supplied to the electric motor and the thrust in accordance with the relationship between an increase in the current value of the electric motor with respect to an increase in the position of the linear motion section at an expected current value for generating a specific thrust and the current value of the electric motor, and wherein the expected current value is a current value that is calculated from a specific thrust by using a value obtained by estimating or assuming in advance the relationship between current and thrust.

# FIG. 1

# FIG. 2

# FIG. 3

# FIG. 4

# FIG. 5

# FIG. 6

# FIG. 7

# FIG. 8

# FIG. 9

# FIG. 10

$$\Delta F / \Delta x = a(w) * F + b(w)$$

61

62

63

$F_a$

$F$

$\Delta F / \Delta x$

# FIG. 11

$$a(w) * F + b(w) / \alpha$$

65

66

$F_a / \alpha_t - I_0$

$I - I_0$

$\Delta I / \Delta x$

# FIG. 12

THRUST CURRENT CONTROL SECTION

Fr

ABNORMALITY
DETECTION
SECTION

45

EFFICIENCY
ESTIMATION
SECTION

35

NO-LOAD
CURRENT
ESTIMATION
SECTION

46

47

3

31

44

32

11

## INTERNATIONAL SEARCH REPORT

| International application No. |
| --- |
| **PCT/JP2022/039887** |

**A. CLASSIFICATION OF SUBJECT MATTER**

*B60T 13/74*(2006.01)i; *B60T 17/22*(2006.01)i; *F16D 65/18*(2006.01)i; *F16D 66/02*(2006.01)i; *F16D 121/24*(2012.01)n
FI: B60T13/74 G; B60T17/22 Z; F16D65/18; F16D66/02 B; F16D121:24

According to International Patent Classification (IPC) or to both national classification and IPC

**B. FIELDS SEARCHED**

Minimum documentation searched (classification system followed by classification symbols)

B60T13/74; B60T17/22; F16D65/18; F16D66/02; F16D121/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-159134 A (HITACHI AUTOMOTIVE SYSTEMS LTD) 23 August 2012 (2012-08-23) paragraphs [0002], [0016]-[0075], fig. 1-18 | 1-10 |
| A | JP 2008-49800 A (HITACHI LTD) 06 March 2008 (2008-03-06) entire text, all drawings | 1-10 |
| A | JP 2018-95072 A (TOYOTA MOTOR CORP) 21 June 2018 (2018-06-21) entire text, all drawings | 1-10 |
| A | JP 2003-106355 A (TOKICO LTD) 09 April 2003 (2003-04-09) entire text, all drawings | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 November 2022** | **27 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2022/039887** |

| Patent document cited in search report | | | Publication date (day/month/year) | Patent family member(s) | Publication date (day/month/year) |
| --- | --- | --- | --- | --- | --- |
| JP | 2012-159134 | A | 23 August 2012 | US 2012/0193177 A1 paragraphs [0004], [0034]-[0094], fig. 1-18<br>DE 102012201323 A1<br>CN 102619910 A<br>KR 10-2012-0088576 A | |
| JP | 2008-49800 | A | 06 March 2008 | US 2008/0048596 A1 entire text, all drawings<br>EP 1892164 A2 | |
| JP | 2018-95072 | A | 21 June 2018 | US 2018/0162333 A1 entire text, all drawings<br>DE 102017128714 A1<br>CN 108216175 A | |
| JP | 2003-106355 | A | 09 April 2003 | (Family: none) | |

Form PCT/ISA/210 (patent family annex) (January 2015)

**EP 4 434 830 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018057065 A

- JP 2018118524 A